# EUROPEAN PATENT APPLICATION

(11) **EP 3 470 152 A1**
(43) Date of publication of application: **17.04.2019**
(21) Application number: 17001666.1
(22) Date of filing: 10.10.2017
(51) Int. Cl.: B22F 1/00, B22F 5/10, C22C 1/04, C22C 9/00, B22F 7/06, C22C 32/00, F16J 9/00, C22C 1/10, B22F 5/02

(54) **BRONZE-POLYTETRAFLUOROETHYLENE COMPOUNDS BASED ON AN OXIDATION-RESISTANT BRONZE POWDER**

(71) Applicant: Schlenk Metallic Pigments GmbH, 91154 Roth (DE)
(72) Inventor: MAUSER, Armin, 91275 Auerbach/Michelfeld (DE)
(74) Representative: Müller-Boré & Partner Patentanwälte PartG mbB

(57) **Abstract**

The present invention relates to a bronze-polytetrafluoroethylene compound based on an oxidation-resistant bronze powder, and to a method for producing the bronze-polytetrafluoroethylene compound. In another aspect, the present invention relates to an oxidation-resistant bronze powder for use in polytetrafluoroethylene compounds.

## Description

The present invention relates to a bronze-polytetrafluoroethylene compound based on an oxidation-resistant bronze powder, and to a method for producing the bronze-polytetrafluoroethylene compound. In another aspect, the present invention relates to an oxidation-resistant bronze powder for use in polytetrafluoroethylene compounds.

By adding fillers, such as a metal, to polytetrafluoroethylene (PTFE), the material wear and deformation characteristics of the obtained compound are significantly enhanced. When using bronze as the filler component, bronze-polytetrafluoroethylene compounds are obtained, which can be suitably used as a material for manufacturing wear rings, piston rings and bearing rings. In particular, the addition of bronze to PTFE leads to an increased dimensional stability, and lowers the creep, cold flow and wear. Furthermore, it increases the hardness and compressive strength while also increasing the thermal and electrical conductivity. Due to these unique properties, bronze-polytetrafluoroethylene compounds find various applications e.g. in the automobile industry.

Typically, bronze-polytetrafluoroethylene compounds are produced by mixing PTFE and a bronze powder comprising bronze particles, subjecting the obtained mixture to high pressure treatment, thereby obtaining a green body, followed by sintering the green body, e.g. in air circulation ovens or in the course of ram extrusion.

During the high pressure treatment, the problem occurs that atmospheric oxygen is not sufficiently pressed out of the green body formed, in particular in case the pressure applied is not sufficiently high, thereby resulting in dark streaks inside the bronze-polytetrafluoroethylene compound. Furthermore, an edge zone oxidation occurs in the subsequent sintering, which renders the edges of the bronze-polytetrafluoroethylene compound dark. That is, the edges of the obtained bronze-polytetrafluoroethylene compound as well as the streaks inside the bronze-polytetrafluoroethylene compound are much darker in color than the compound core. Disadvantageously, this difference in color cannot be eliminated by further process steps. Due to high quality requirements, especially in the automobile industry, it is, however, necessary that the bronze-polytetrafluoroethylene compounds have a uniform appearance, such as a consistent color. As a consequence, the darker oxidation zones of the bronze-polytetrafluoroethylene compounds obtained after sintering have to be eliminated and discarded, e.g. by means of peeling, punching and cutting. Accordingly, there is an increased problem of waste, a higher consumption of raw materials (bronze powder and PTFE), an increased exploitation of natural resources, a higher environmental impact, longer production times, and higher manufacturing costs.

In order to avoid the problem of dark streaks as well as the problem of edge zone oxidation, it has been proposed in the art to provide the bronze powder with a surface coating for passivation of the surface. Although such surface coating might lead to an improvement in this respect, it is clear that an additional process step is required, which, of course, lowers the efficiency of the whole production process. Furthermore, such surface coating alters the overall appearance of the bronze powder as well as the overall appearance of the bronze-polytetrafluoroethylene compound obtained therefrom, including its color.

Thus, there is still a need for novel bronze-polytetrafluoroethylene compounds which overcome the above-mentioned disadvantages known in the art.

Accordingly, in view of the above, the technical problem underlying the present invention is to provide a bronze-polytetrafluoroethylene compound which shall have a uniform appearance, in particular a consistent color, without requiring a surface-coating of the bronze particles used for obtaining the bronze-polytetrafluoroethylene compound, thereby allowing for an increased efficiency of the production thereof in terms of natural resources, energy, equipment and costs.

The solution to the above technical problem is achieved by providing the embodiments characterized in the claims.

In particular, in a first aspect of the present invention, there is provided a bronze-polytetrafluoroethylene compound, comprising a sintered mixture of bronze particles and polytetrafluoroethylene, wherein the amount of the bronze particles is from 40 to 60 mass%, and the amount of the polytetrafluoroethylene is from 60 to 40 mass%, based on the total mass of the bronze particles and the polytetrafluoroethylene, characterized in that the bronze particles have an elemental composition consisting of:
Sn in an amount of from 10 to 30 mass%;
Zn in an amount of from 2 to 20 mass%; and
one of the following elements:
   Al in an amount of from 0.1 to 5 mass%; or
   P in an amount of from 0.01 to 0.4 mass%,
   with the remainder consisting of Cu and inevitable impurities,
   wherein the bronze particles have no surface coating.

In the bronze-polytetrafluoroethylene compound according to the present invention, the streaks as well as the edge zone oxidation of the bronze particles are substantially minimized up to completely prevented during sintering, i.e. darker oxidation zones are not observable in the bronze-polytetrafluoroethylene compound obtained after sintering. In particular, the obtained compound has a uniform appearance, in particular a consistent color. Therefore, it is no longer necessary to discard any edge parts as well as dark streaks thereof. Accordingly, it is thus possible to significantly increase the production efficiency in terms of natural resources, energy, equipment and costs. The reason therefor lies in the specific elemental composition of the bronze particles used, which may be seen as oxidation-resistant. Advantageously, the bronze particles used do not require any surface coating for avoiding the occurrence of streaks as well as the occurrence of edge zone oxidation. Specifically, the bronze particles used herein are made of a bronze-based alloy which provides an inherent passivation without the necessity of an additional surface coating. Thus, any detrimental influences which might arise from the chemicals used for such surface coating are avoided, which could otherwise cause a deterioration in the quality as well as in the mode of operation of the bronze-polytetrafluoroethylene compound.

According to the present invention, the bronze-polytetrafluoroethylene compound comprises a sintered mixture of bronze particles and polytetrafluoroethylene. As will be described further below in more detail, the bronze-polytetrafluoroethylene compound of the present invention can be obtained by sintering a mixture of the bronze particles and the polytetrafluoroethylene, with said mixture having been subjected to high pressure treatment in advance.

As mentioned above, the present invention is characterized in that the bronze particles have an elemental composition consisting of:
Sn in an amount of from 10 to 30 mass%;
Zn in an amount of from 2 to 20 mass%; and
one of the following elements:
   Al in an amount of from 0.1 to 5 mass%; or
   P in an amount of from 0.01 to 0.4 mass%,
   with the remainder consisting of Cu and inevitable impurities.

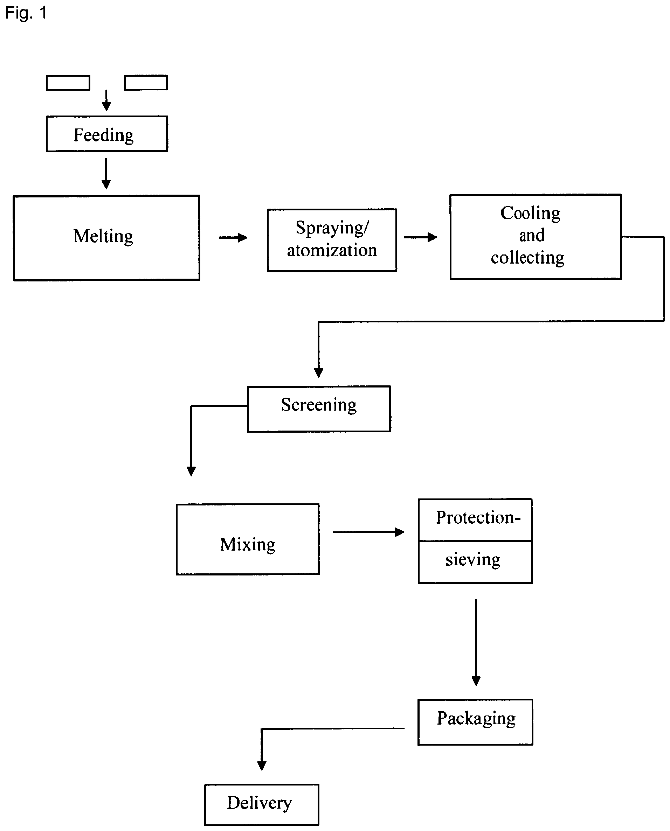

Herein, the bronze particles may be obtained by any method known in the art. Typically, copper and tin are alloyed with the other elements, and then atomized in air. Fig. 1 shows a typical process flow of the production of the bronze particles used herein.

As known to the skilled person, the size of the bronze particles as well as their shape can be controlled by the specific atomization conditions. According to the present invention, the size of the bronze particles as well as their shape are not particularly limited.

Specifically, as far as the size of the bronze particles is concerned, the amount of the bronze particles having a particle size of 100 µm or more may be at most 5%, without being limited thereto. In another embodiment, the amount of the bronze particles having a particle size of 50 µm or more is at most 5%. In a further embodiment, the amount of the bronze particles having a particle size of 25 µm or more is at most 5%. Herein, the particle size of the bronze particles is measured by sieve analysis in accordance with DIN 66165. The particle size as referred to herein corresponds to the fineness of the bronze particles. Other typical particle sizes in this respect are, without limitation, 32 µm, 40 µm, 45 µm, 63 µm, and 80 µm, i.e. in these embodiments, the amount of the bronze particles having a particle size of 80 µm or more, 63 µm or more, 45 µm or more, 40 µm or more, and 32 µm or more is at most 5%.

Specifically, as far as the shape of the bronze particles is concerned, the bronze particles may have an irregular shape or may have a spherical shape, without limitation. As known to the skilled person, the shape of the bronze particles *inter alia* depends on the elemental composition thereof. For example, the spherical shape of the bronze particles can be achieved by addition of small amounts of phosphorus, which has a deoxidizing effect. On the other hand, the irregular shape of the bronze particles can be achieved by addition of zinc. When using a combination of phosphorus and zinc, the shape of the bronze particles tends to be semi-spherical. In this respect, the extent of spheroidization depends on the amount of alloyed phosphorus. For example, with the amount of phosphorus being at least 0.2 mass%, the shape of the bronze particles turns to be more spherical.

In this context, it is clear to the skilled person that the size of the bronze particles as well as their shape, influenced by the elemental composition, determine the mechanical characteristics of the bronze powder comprising these bronze particles, i.e. the hardness or the apparent density of the bronze powder etc., and as such, also determine the mechanical characteristics of the bronze-polytetrafluoroethylene compound.

With regard to the elemental composition of the bronze particles, the amount of tin is from 10 to 30 mass%, preferably from 10 to 20 mass%, and more preferably from 10 to 15 mass%.

Furthermore, in the elemental composition, the amount of zinc is from 2 to 20 mass%, preferably from 2 to 10 mass%, and more preferably from 2 to 5 mass%.

As far as the elements aluminum and phosphorus are concerned, either aluminum in an amount of from 0.1 to 5 mass%, or phosphorus in an amount of from 0.01 to 0.4 mass% forms part of the elemental composition. For example, in an embodiment of the present invention, phosphorus is present in the elemental composition of the bronze particles, while aluminum is absent.

The bronze particles used for the bronze-polytetrafluoroethylene compound according to the present invention have the elemental composition as described above. The remainder consists of copper and inevitable impurities. Examples of such inevitable impurities include oxygen and iron amongst others.

Typical elemental compositions of the bronze particles used herein are Cu (remainder), Sn (10 mass%), Zn (2 mass%), and P (at most 0.4 mass%); Cu (remainder), Sn (11 mass%), Zn (4 mass%), and P (at most 0.4 mass%); Cu (remainder), Sn (15 mass%), Zn (4 mass%), and P (at most 0.4 mass%); Cu (remainder), Sn (20 mass%), Zn (4 mass%), and P (at most 0.4 mass%); and Cu (remainder), Sn (10 mass%), Zn (2 mass%), and Al (1 mass%). However, the present invention is by no means limited to the above elemental compositions.

Again, as already mentioned above, the bronze particles have no surface coating. That is, the elemental composition as described above is also at the surface part of the bronze particles used herein.

According to the present invention, the polytetrafluoroethylene used herein is not particularly limited as long as it can be mixed with the bronze particles. For example, the PTFE may also be in the form of particles, wherein the size of the PTFE particles may be similar to the size of the bronze particles. Furthermore, the mass average molecular mass and the density of the PTFE are not specifically limited, either. According to the present invention, the polytetrafluoroethylene can be obtained by any means known in the art. Preferably, highly pure polytetrafluoroethylene, e.g. virgin polytetrafluoroethylene, is used herein.

Based on the above-defined bronze particles and the above-defined polytetrafluoroethylene, a bronze-polytetrafluoroethylene compound can be obtained, which is neither affected by dark streaks nor by edge zone oxidation, even though no surface coating is present on the bronze particles, which could serve as a passivation. In other words, the bronze particles used herein may be seen as oxidation-resistant, with the passivation being inherent.

In the bronze-polytetrafluoroethylene compound according to the present invention, the amount of the bronze particles is from 40 to 60 mass%, and the amount of the polytetrafluoroethylene is from 60 to 40 mass%, based on the total mass of the bronze particles and the polytetrafluoroethylene. Herein, the total mass of the bronze particles and the polytetrafluoroethylene means the total mass before sintering. In this context, it is clear to the skilled person that in the course of sintering, the total mass of the bronze particles and the polytetrafluoroethylene may change due to a slight decomposition of the PTFE at the typical sintering temperatures, as described further below.

In another embodiment of the bronze-polytetrafluoroethylene compound, the amount of the bronze particles is from 40 to 50 mass%, and the amount of the polytetrafluoroethylene is from 60 to 50 mass%. In a further embodiment, the amount of the bronze particles is from 40 to 45 mass%, and the amount of the polytetrafluoroethylene is from 60 to 55 mass%.

Apart from the above-defined bronze particles and the above-defined polytetrafluoroethylene, the bronze-polytetrafluoroethylene compound according to the present invention may contain further additives, as required. Examples of such additives include different kinds of other fillers, e.g. glass or carbon fibers, or inorganic pigments, for modifying the properties of the bronze-polytetrafluoroethylene compound in view of its intended application.

In a further aspect, the present invention relates to a method for producing a bronze-polytetrafluoroethylene compound, comprising the steps of:
(a) providing bronze particles and polytetrafluoroethylene, wherein the amount of the bronze particles is from 40 to 60 mass%, and the amount of the polytetrafluoroethylene is from 60 to 40 mass%, based on the total mass of the bronze particles and the polytetrafluoroethylene, characterized in that the bronze particles have an elemental composition consisting of:
   Sn in an amount of from 10 to 30 mass%;
   Zn in an amount of from 2 to 20 mass%; and
   one of the following elements:
      Al in an amount of from 0.1 to 5 mass%; and
      P in an amount of from 0.01 to 0.4 mass%,
      with the remainder consisting of Cu and inevitable impurities, and
      wherein the bronze particles have no surface coating;
(b) mixing the bronze particles and the polytetrafluoroethylene provided in step (a), thereby obtaining a mixture;
(c) subjecting the mixture obtained in step (b) to high pressure treatment, thereby obtaining a green body; and
(d) sintering the green body obtained in step (c) while optionally maintaining the high pressure, thereby obtaining a bronze-polytetrafluoroethylene compound.

The above-defined method allows to produce the bronze-polytetrafluoroethylene compound according to the present invention, as defined above. In this respect, all limitations and definitions provided above for the bronze-polytetrafluoroethylene compound according to the present invention equally apply to the method for producing a bronze-polytetrafluoroethylene compound according to the present invention, and *vice versa.*

In the following, steps (a) to (d) of the method for producing a bronze-polytetrafluoroethylene compound according to the present invention are described in more detail:
In step (a) of the method as defined above, the bronze particles and the polytetrafluoroethylene are provided, wherein the amount of the bronze particles is from 40 to 60 mass%, e.g. from 40 to 50 mass%, or from 40 to 45 mass%, and wherein the amount of the polytetrafluoroethylene is from 60 to 40 mass%, e.g. from 60 to 50 mass%, or from 60 to 45 mass%, based on the total mass of the bronze particles and the polytetrafluoroethylene. As required, further additives are provided in step (a). As far as the bronze particles are concerned, reference is made to the text passages hereinabove, wherein the elemental composition, the particle size, the shape, and the mechanical characteristics thereof have been described in more detail. In line with the above, the bronze particles provided in step (a) have no surface coating. Besides, the polytetrafluoroethylene provided in step (a) is also as defined above.
In step (b) of the method as defined above, the bronze particles and the polytetrafluoroethylene which have been provided in step (a) are mixed, optionally together with other additives, if provided in step (a). Thereby, a mixture of the bronze particles and the polytetrafluoroethylene is obtained, simply referred to as mixture. Herein, the mixing of the bronze particles and the polytetrafluoroethylene can be accomplished by any means known in the art. For example, the bronze particles and the polytetrafluoroethylene can be mixed in a mold having the desired shape, depending on the respective application of the bronze-polytetrafluoroethylene compound to be obtained, wherein the mold is also suitable for high pressure treatment, such as conducted in step (c).

For example, when mixing the bronze particles and the polytetrafluoroethylene without the presence of a solvent, a mixture for non-free flow compounds can be obtained. On the other hand, when mixing the bronze particles and the polytetrafluoroethylene in an aqueous medium, a mixture for different grades of free flow compounds and/or different grades of presintered compounds can be obtained.

In step (c) of the method as defined above, the mixture which has been obtained in step (b) is subjected to high pressure treatment. Thereby, a green body is obtained. In the course of the high pressure treatment, atmospheric oxygen is pressed out from the green body formed.

As recognized in the art, it is generally preferred to set the pressure as high as possible. Thereby, it can be ensured that the atmospheric oxygen is pressed out from the green body during its formation as much as possible, which would otherwise promote dark streaks inside the compound as well as an edge zone oxidation in the subsequent sintering. However, in the production processes known in the art, even if further raising the pressure, there is still a small amount of oxygen remaining in the green body, leading to an edge zone oxidation thereof during sintering.

On the other hand, according to the present invention, since the bronze particles are oxidation-resistant, it is no longer mandatorily required to set the pressure in step (c) excessively high. Accordingly, since it is possible to work with a lower pressure, the requirements with respect to the apparatus used for the high pressure treatment are simplified. Accordingly, the present invention not only allows to suppress the edge zone oxidation of the bronze-polytetrafluoroethylene compound, but also allows to facilitate the production thereof. For example, the pressure applied in step (c) may be in the range of 10 to 100 MPa, e.g. 20 to 80 MPa, or 25 to 70 MPa, without limitation.

Preferably, the pressure is increased slowly and steadily in step (c) so as to achieve a complete outgasing of the air.

According to the present invention, the duration of the high pressure treatment in step (c) of the above-defined method is not specifically limited.

In case the bronze particles and the polytetrafluoroethylene are mixed in an aqueous medium in step (b), the mixture may be pelletized and dried before being subjected to the high pressure treatment in step (c), thereby obtaining a green body which is both compact and semi-finished. As an alternative, instead of pelletizing and drying, the mixture obtained by mixing the bronze particles and the polytetrafluoroethylene in an aqueous medium is subjected to the high pressure treatment by ram extrusion, thereby obtaining a green body in an endless profile shape.

In step (d) of the method as defined above, the green body which has been obtained in step (c) is sintered. During sintering in step (d), the pressure applied in step (c) may be maintained. However, according to the present invention, it is not required to maintain the pressure. As mentioned above, since the bronze particles are oxidation-resistant, an edge zone oxidation during sintering does not significantly occur.

As far as the sintering temperature is concerned, the present invention is not particularly limited. Typically, the sintering is conducted at temperatures well above the crystalline melting point of polytetrafluoroethylene, which is about 320 to 340°C. As a general rule, the higher the sintering temperature, the less time is required for completing the sintering, i.e. the duration of the sintering depends on the sintering temperature. Since polytetrafluoroethylene starts to decompose at a temperature of around 350°C, it is advisable not to excessively exceed a temperature of 350°C during sintering. Therefore, sintering may be carried out, for example, at a temperature in the range of from 350 to 380°C, e.g. at 360°C. During the sintering, the polytetrafluoroethylene is melted, i.e. the individual PTFE particles in the green body begin to coalesce, thereby rendering the macroscopic structure of the obtained bronze-polytetrafluoroethylene compound homogeneous. Since no edge zone oxidation occurs during sintering, the bronze-polytetrafluoroethylene compound has a uniform appearance, in particular a consistent color. Specifically, no darker edge parts are present, which would otherwise have to be removed.

When sintering the compact and semi-finished green body obtained in step (c) as described above, while optionally maintaining the high pressure, a semi-finished bronze-polytetrafluoroethylene compound can be obtained. In case the green body is obtained by ram extrusion in step (c), an endless profile of the bronze-polytetrafluoroethylene compound can be obtained after sintering.

In another aspect, the present invention relates to a bronze powder comprising bronze particles, wherein the bronze particles have an elemental composition consisting of:
Sn in an amount of from 10 to 30 mass%;
Zn in an amount of from 2 to 20 mass%; and
one of the following elements:
   Al in an amount of from 0.1 to 5 mass%; or
   P in an amount of from 0.01 to 0.4 mass%,
   with the remainder consisting of Cu and inevitable impurities,
   wherein the bronze particles have no surface coating.

The bronze powder according to the present invention can be suitably used for producing the bronze-polytetrafluoroethylene compound according to the present invention. For example, the bronze particles comprised in the above-defined bronze powder can be used as the bronze particles to be provided in step (a) of the method for producing a bronze-polytetrafluoroethylene compound according to the present invention. Advantageously, the bronze powder according to the present invention is oxidation-resistant, i.e. the bronze particles comprised therein are oxidation-resistant, and thus, the bronze powder allows to obtain the bronze-polytetrafluoroethylene compound without the occurrence of dark streaks inside the compound and without the occurrence of edge zone oxidation.

Again, all limitations and definitions provided above in connection with the bronze-polytetrafluoroethylene compound according to the present invention and the method for producing a bronze-polytetrafluoroethylene compound according to the present invention also apply to the bronze powder according to the present invention, as applicable.

For the sake of conciseness, reference is made to the text passages hereinabove, wherein the elemental composition, the particle size, the shape, and the mechanical characteristics of the bronze particles have been described in more detail.

In yet another aspect, the present invention relates to the use of the above-defined bronze powder in a bronze-polytetrafluoroethylene compound. Accordingly, the bronze particles comprised in the bronze powder according to the present invention may be used as the bronze component in a bronze-polytetrafluoroethylene compound.

The present invention provides a bronze-polytetrafluoroethylene compound which is based on oxidation-resistant bronze particles. Advantageously, in the course of producing the bronze-polytetrafluoroethylene compound, dark streaks as well as an edge zone oxidation do not occur when sintering the green body. Thus, the obtained bronze-polytetrafluoroethylene compound has a uniform appearance, in particular a consistent color. Therefore, it is no longer necessary to remove any dark streaks and edge parts of the bronze-polytetrafluoroethylene compound in view of the high quality requirements, especially in the automobile industry. Furthermore, due to the oxidation resistance of the bronze particles, no surface coating is required, and the pressure applied in the high pressure treatment can be lowered as it is no longer necessary to entirely press out the oxygen before conducting the sintering. Summing up, the present invention allows to increase the efficiency in the production of bronze-polytetrafluoroethylene compounds in terms of natural resources, energy, equipment and costs.

The Figure shows:
Fig. 1 shows a typical process flow of the production of the bronze particles used herein.

### Examples

The present invention is further illustrated by the following Examples. However, the present invention is not to be construed as being limited thereto.

Bronze-polytetrafluoroethylene compounds were prepared based on bronze powders comprising the bronze particles specified in Table A and Table B, below. All the bronze-polytetrafluoroethylene compounds prepared contained 42.5 mass% of the respective bronze particles and 57.5 mass% of polytetrafluoroethylene, based on the total mass of the bronze particles and the polytetrafluoroethylene.

**Table A - elemental compositions (remainder being Cu and inevitable impurities)**

| bronze particles | Sn [mass%] | Zn [mass%] | P [mass%] | Al [mass%] |
|---|---|---|---|---|
| sample 1 | 10 | 2 | 0.2 | --- |
| sample 2 | 11 | 4 | 0.01 | --- |
| sample 3 | 15 | 4 | 0.01 | --- |
| sample 4 | 20 | 4 | 0.01 | --- |
| sample 5 | 10 | 2 | --- | 1 |

**Table B - mechanical characteristics**

| bronze particles | particle size [µm] | mean particle size dso [µm] | particle shape | apparent density [g/cm³] |
|---|---|---|---|---|
| sample 1 | < 32 | 19 | spherical | 5.0 |
| sample 2 | < 32 | 23 | irregular | 3.2 |
| sample 3 | < 32 | 21 | irregular | 3.2 |
| sample 4 | < 32 | 19 | irregular | 3.4 |
| sample 5 | < 32 | 21 | irregular | 3.5 |

When using the bronze particles specified in Table A and Table B, neither dark streaks inside the compound nor an edge zone oxidation could be observed in the course of sintering the green bodies. The obtained bronze-polytetrafluoroethylene compounds had a uniform appearance, in particular a consistent color, thus being particularly suitable in applications requiring high quality, e.g. in the automobile industry.

## Claims

1. A bronze-polytetrafluoroethylene compound, comprising a sintered mixture of bronze particles and polytetrafluoroethylene, wherein the amount of the bronze particles is from 40 to 60 mass%, and the amount of the polytetrafluoroethylene is from 60 to 40 mass%, based on the total mass of the bronze particles and the polytetrafluoroethylene, **characterized in that** the bronze particles have an elemental composition consisting of:
Sn in an amount of from 10 to 30 mass%;
Zn in an amount of from 2 to 20 mass%; and
one of the following elements:
Al in an amount of from 0.1 to 5 mass%; or
P in an amount of from 0.01 to 0.4 mass%,
with the remainder consisting of Cu and inevitable impurities,
wherein the bronze particles have no surface coating.

2. The bronze-polytetrafluoroethylene compound according to claim 1, wherein the amount of the bronze particles having a particle size of 100 µm or more is at most 5%.

3. The bronze-polytetrafluoroethylene compound according to claim 2, wherein the amount of the bronze particles having a particle size of 50 µm or more is at most 5%.

4. The bronze-polytetrafluoroethylene compound according to any one of claims 1 to 3, wherein the bronze particles are irregularly shaped.

5. The bronze-polytetrafluoroethylene compound according to any one of claims 1 to 3, wherein the bronze particles are spherically shaped.

6. The bronze-polytetrafluoroethylene compound according to any one of claims 1 to 5, wherein the amount of Sn is from 10 to 20 mass%.

7. The bronze-polytetrafluoroethylene compound according to claim 6, wherein the amount of Sn is from 10 to 15 mass%.

8. The bronze-polytetrafluoroethylene compound according to any one of claims 1 to 7, wherein the amount of Zn is from 2 to 10 mass%.

9. The bronze-polytetrafluoroethylene compound according to claim 8, wherein the amount of Zn is from 2 to 5 mass%.

10. The bronze-polytetrafluoroethylene compound according to any one of claims 1 to 9, wherein the amount of the bronze particles is from 40 to 50 mass%, and the amount of the polytetrafluoroethylene is from 60 to 50 mass%, based on the total mass of the bronze particles and the polytetrafluoroethylene.

11. The bronze-polytetrafluoroethylene compound according to claim 10, wherein the amount of the bronze particles is from 40 to 45 mass%, and the amount of the polytetrafluoroethylene is from 60 to 55 mass%, based on the total mass of the bronze particles and the polytetrafluoroethylene.

12. A method for producing a bronze-polytetrafluoroethylene compound, comprising the steps of:
(a) providing bronze particles and polytetrafluoroethylene, wherein the amount of the bronze particles is from 40 to 60 mass%, and the amount of the polytetrafluoroethylene is from 60 to 40 mass%, based on the total mass of the bronze particles and the polytetrafluoroethylene, **characterized in that** the bronze particles have an elemental composition consisting of:
Sn in an amount of from 10 to 30 mass%;
Zn in an amount of from 2 to 20 mass%; and
one of the following elements:
Al in an amount of from 0.1 to 5 mass%; and
P in an amount of from 0.01 to 0.4 mass%,
with the remainder consisting of Cu and inevitable impurities, and
wherein the bronze particles have no surface coating;
(b) mixing the bronze particles and the polytetrafluoroethylene provided in step (a), thereby obtaining a mixture;
(c) subjecting the mixture obtained in step (b) to high pressure treatment, thereby obtaining a green body; and
(d) sintering the green body obtained in step (c) while optionally maintaining the pressure, thereby obtaining a bronze-polytetrafluoroethylene compound.

13. The method according to claim 12, wherein the pressure in step (c) and optionally in step (d) is in the range of from 10 to 100 MPa.

14. A bronze powder comprising bronze particles, wherein the bronze particles have an elemental composition consisting of:
Sn in an amount of from 10 to 30 mass%;
Zn in an amount of from 2 to 20 mass%; and
one of the following elements:
Al in an amount of from 0.1 to 5 mass%; or
P in an amount of from 0.01 to 0.4 mass%,
with the remainder consisting of Cu and inevitable impurities,
wherein the bronze particles have no surface coating.

15. Use of the bronze powder according to claim 14 in a bronze-polytetrafluoroethylene compound.
